# EUROPÄISCHE PATENTSCHRIFT

(11) **EP 0 561 057 B1**
(45) Veröffentlichungstag und Bekanntmachung des Hinweises auf die Patenterteilung: **28.08.1996**
(21) Anmeldenummer: 92121759.2
(22) Anmeldetag: 22.12.1992
(51) Int. Cl.: B60J 7/06, B60J 7/12

(54) **Fahrzeugdach**
Vehicle roof
Toit de véhicule

(30) Priorität: 09.03.1992 DE 4207444
(43) Veröffentlichungstag der Anmeldung: 22.09.1993
(73) Patentinhaber: WEBASTO KAROSSERIESYSTEME GmbH, D-82131 Stockdorf (DE)
(72) Erfinder: Mayer, Johann, W-8067 Petershausen (DE); Reihl, Peter, W-8130 Starnberg 2 (DE)
(74) Vertreter: Wiese, Gerhard

(56) Entgegenhaltungen:
- EP-A- 0 376 203
- DE-A- 3 925 789
- DE-A- 3 939 524
- DE-C- 3 907 228
- GB-A- 1 539 906
- US-A- 4 136 906

## Beschreibung

Die Erfindung bezieht sich auf ein Fahrzeugdach mit einem ein flexibles Material umfassenden, spannbaren Verdeckteil, das eine in einer festen Dachfläche des Fahrzeugs vorgesehene und von einem Dachrahmen mit einer umlaufenden Dichtung eingefaßte Dachöffnung wahlweise verschließt oder wenigstens teilweise freilegt, und dessen wenigstens eine Querseite über eine verrastbare Verbindungseinrichtung mit der festen Dachfläche lösbar verbunden ist.

Aus der gattungsbildenden DE-A-3 102 164 (A1) ist ein Kraftfahrzeug mit einem festen Dach bekannt, das wenigstens eine Öffnung und ein flexibles Verdeckteil für diese Öffnung aufweist. Ein Endbereich des flexiblen Verdeckteils ist in der Nähe des vorderen Randes der Öffnung fest mit dem Dach verbunden. Der gegenüberliegende Endbereich mit der gegenüberliegenden Querseite der flexiblen Abdeckung ist mit Verbindungselementen versehen, welche in einer aufgespannten Schließstellung der Abdeckung eine Schnellkupplung mit an dem hinteren Rand der Öffnung angebrachten Spannteilen ermöglichen. Das flexible Verdeckteil läßt sich zusammenfalten und mittels eines in der festen Dachfläche vorgesehenen Formstücks am Fahrzeugdach verstauen und in dieser Lage mit Hilfe von Befestigungsorganen festlegen. Alternativ läßt sich das flexible Verdeckteil in eine aufgespannte Lüftungsstellung ausstellen. Das flexible Verdeckteil ist eingliedrig ausgelegt, und es läßt sich daher nur eine relativ kleine Dachöffnung gegebenenfalls freilegen. Ferner ist das flexible Verdeckteil unlösbar mit wenigstens einem festen Dachteil verbunden. Bei diesem Fahrzeugdach läßt sich die Dachöffnung vollständig freilegen, wenn das flexible Verdeckteil zusammengefaltet ist oder das flexible Verdeckteil läßt sich in eine Lüftungsstellung unter teilweiser Freigabe der Dachöffnung ausstellen.

Ferner ist in der eigenen älteren Anmeldung DE-A-4 040 249.5 (A1) vom 17. September 1990 ein Faltdach für Fahrzeuge angegeben, bei dem das Verdeckteil an dachfesten Längsführungen gleitbeweglich geführt ist. Hierbei ist als wesentliches Lösungsprinzip angegeben, daß Faltdacheigenschaften oder Klappdacheigenschaften mit jenen eines Schiebedachs wirkungsmäßig verknüpft werden, wobei das Verdeckteil insgesamt vom Fahrzeugdach abnehmbar ist. In der weiteren, eigenen älteren Anmeldung DE-A-4 106 493.3 vom 1. März 1991 ist ein Faltdach für Fahrzeuge angegeben, bei dem das flexible Verdeckteil an einer Querseite, vorzugsweise der in Längsrichtung gesehen hinten liegenden Querseite, dachfest verankert ist, so daß das Faltdach nach seiner Montage fest am Fahrzeug verankert ist und bleibt. Zugleich dient diese dachfest verbundene Querseite des Verdeckteils als eine im wesentlichen horizontal verlaufende Drehachse, um welche das Verdeckteil in der die Dachöffnung vollständig freigebenden Öffnungsstellung in Richtung nach hinten gedreht bzw. geklappt wird. In dieser Offenstellung des Verdeckteils kann die gesamte, in der festen Dachfläche vorgesehene Dachöffnung freigelegt werden, so daß den Fahrzeuginsassen ein cabrioähnliches Gefühl vermittelt wird. Das Faltdach bildet hierbei eine vorgefertigte Baueinheit.

Aus der EP-A-0 376 203 (A2) ist ein Faltdach bekannt, bei dem in den vier Eckbereichen eines flexiblen Verdecks Formteile angeordnet sind, welche durch längsverlaufende Spanngurte miteinander in Verbindung stehen. Die Spannung der Spanngurte oder Spannseile wird dabei beim Verschließen des Verdecks in der Endphase durch Herunterdrücken des vorderen Endes desselben von in den hinteren Festelementen vorgesehenen Spannfedern aufgebracht. Das Faltverdeck ist mit seinem hinteren Ende fest mit dem festen Fahrzeugdach verbunden und daher nicht für ein vollständiges Freigeben der Dachöffnung geeignet.

Aus der US-A-4 136 906 ist ebenfalls ein Faltdach bekannt, dessen flexibles Verdeck mit seinem hinteren Ende fest mit dem festen Fahrzeugdach verbunden ist. Auch bei diesem ist somit kein vollständiges Freilegen der Dachöffnung möglich.

Aus der DE-C-3 907 228 (C1) ist ferner eine Zugseilanordnung zum Stabilisieren einer Abschlußkante eines Verdeckbezuges bekannt, bei der ein Zugzeil an einem Cabrioverdeck mittels eines Formfederelementes in Schließposition in einer gestrafften Lage gehalten wird. Durch die Befestigung an einer hinteren Verdecksäule ist das dort gezeigte Verdeck ebenfalls nicht komplett entnehmbar und in einem Stauraum des Fahrzeuges unterzubringen.

Demgegenüber zielt die Erfindung darauf ab, ein Fahrzeugdach mit einem ein flexibles Material umfassenden, spannbaren Verdeckteil der gattungsgemäßen Art bereitzustellen, welches bei einer kostengünstigen Herstellung und Einbauweise die Freilegung einer möglichst großen Dachöffnung gestattet, wobei das Verdeckteil abnehmbar und leicht im Fahrzeug verstaubar ist.

Dennoch soll eine möglichst zuverlässige Abdichtung in der Schließstellung des Verdeckteils am Fahrzeug sichergestellt werden.

Nach der Erfindung zeichnet sich ein Fahrzeugdach mit einem ein flexibles Material aufweisenden, spannbaren Verdeckteil, das eine in einer festen Dachfläche des Fahrzeugs vorgesehene und von einem Dachrahmen mit einer umlaufenden Dichtung eingefaßte Dachöffnung wahlweise verschließt oder freilegt, und dessen wenigstens eine Querseite über eine verrastbare Verbindungseinrichtung mit der festen Dachfläche lösbar verbunden ist, dadurch aus, daß das Verdeckteil an der vorderen und der hinteren Querseite relativ starre Rahmenteile umfaßt, welche über in Längsrichtung verlaufende Spannelemente miteinander verbunden sind und daß auch die andere Querseite des Verdeckteils lösbar mit der festen Dachfläche verbunden ist.

Das Verdeckteil beim erfindungsgemäßen Fahrzeugdach läßt sich kostengünstig herstellen, weil es im wesentlichen zwei relativ starre Rahmenteile umfaßt, welche über in Längsrichtung verlaufende Spannelemente miteinander verbunden sind, wobei diese gerippeartige Grundkonstruktion von dem flexiblen Material überspannt wird, welches fest mit den relativ starren Rahmenteilen verbunden ist. Durch diese Auslegung mit den beiden untereinander verbundenen Rahmenteilen kann das Verdeckteil in der Schließstellung insgesamt sowohl in Querrichtung als auch in Längsrichtung zuverlässig derart gespannt werden, daß das Verdeckteil gegen die umlaufende Dichtung am Dachrahmen so angedrückt wird, daß man eine zuverlässige Abdichtung in der Schließstellung des Verdeckteils erreichen kann. Da beim erfindungsgemäßen Fahrzeugdach das Verdeckteil nicht fest und bleibend am Fahrzeugdach verankert ist, läßt es sich mit wenigen Handgriffen durch die verrastbare Verbindungseinrichtung vom Fahrzeugdach lösen und abnehmen und kann dann auf eine Größe mit mindestens den Abmessungen des starren Rahmenteils zusammengelegt und leicht im Wageninnern verstaut werden.

Somit kann das Verdeckteil immer mitgeführt werden, so daß beim Einsetzen von Regen beispielsweise die große, freigelegte Dachöffnung schnell wieder verschlossen werden kann. Die beim erfindungsgemäßen Fahrzeugdach freigelegte, relativ große Dachöffnung vermittelt den Fahrzeuginsassen ein cabrioähnliches Gefühl, wenn das Verdeckteil vom Fahrzeug abgenommen ist. Auch ist die Auslegung nach der Erfindung derart getroffen, daß sich ein Fahrzeugdach nach der Erfindung auch noch nachträglich in ein Fahrzeug, mit möglichst wenig Aufwand verbunden, einbauen läßt.

Vorzugsweise werden die Spannelemente von einem, eine Dichtungsanpressung in Längsrichtung bei gespanntem Verdeckteil bewirkenden Spannseil gebildet. Die Spannseile verlaufen hierbei im wesentlichen parallel in Längsrichtung und sind an den beiden relativ starren Rahmenteilen fest verankert. Diese als Spannseile ausgebildeten Spannelemente ermöglichen über die Längserstreckungen des Verdeckteils eine möglichst gleichmässige Anpressung des Verdeckteils gegen die umlaufende Dichtung am Dachrahmen, so daß in der Schließstellung des Verdeckteils eine zuverlässige Abdichtung erreicht wird.

Um eine Anpassung des Verdeckteils an möglichst, unterschiedliche Dachwölbungen zu erreichen, umfaßt das Verdeckteil mehrere, im Abstand zueinander angeordnete und mit dem flexiblen Material fest verbundene Querversteifungsspriegel. Zusätzlich gestatten diese Querversteifungsspriegel eine Vergleichmäßigung der Anpressung des Verdeckteils gegen die umlaufende Dichtung in der Schließstellung desselben.

Vorzugsweise ist das Fahrzeugdach nach der Erfindung derart ausgelegt, daß wenigstens das vordere Rahmenteil mit je einem karosseriefesten Aufnahmebolzen an der Längsdachseite zum Spannen des Verdeckteils zusammenarbeitet. Mit Hilfe dieser karosseriefesten Aufnahmebolzen können die relativ starren Rahmenteile des erfindungsgemäßen Verdeckteils in Verbindung mit der verrastbaren Verbindungseinrichtung in der Schließstellung des Verdeckteils mittels der Spannelemente gleichmäßig über die Dachöffnung hinweg gegeneinander verspannt werden. Da wenigstens zwei Spannkrafteinleitungsstellen pro Längsseite des Verdeckteils vorhanden sind, wird hierdurch auch eine gleichmäßige Spannungsverteilung auf das Verdeckteil insgesamt gesehen erzielt.

Vorzugsweise wird der karosseriefeste Aufnahmebolzen wenigstens teilweise von einem hakenförmigen Teil des Rahmenteils umgriffen, so daß das Verdeckteil im Schließzustand und im Spannzustand zuverlässig am Fahrzeugdach fixiert ist.

Vorzugsweise ist wenigstens eines der Rahmenteile mittels eines Sicherheitsschnellverschlusses in der Schließstellung verriegelbar. Mit Hilfe dieses Sicherheitsschnellverschlusses wird erreicht, daß das Verdeckteil in der Schließstellung sich nicht vom Fahrzeugdach beispielsweise durch Erschütterungen o.dgl.lösen kann, sondern der Sicherheitsschnellverschluß zuverlässig, vorzugsweise federbelastet in seiner Schließstellung bleibt.

Vorzugsweise ist der Sicherheitsschnellverschluß an wenigstens einer der Querseiten angeordnet. Vorzugsweise ist der Sicherheitsschnellverschluß an der vorderen Querseite angeordnet, so daß er leicht vom Fahrzeuginnenraum und insbesondere von den Vordersitzen her, zugänglich ist. Vorzugsweise ist er etwa in der Mitte in Querrichtung angeordnet.

Gemäß einer bevorzugten Ausführungsform umfaßt der Sicherheitsschnellverschluß ein karosseriefestes Hakenteil und ein damit zusammenarbeitendes und am Rahmenteil befestigtes Schließteil, welches mittels einer Betätigungseinrichtung, vorzugsweise einer Betätigungshandhabe, in einer Spannstellung verriegelbar ist. Das Schließteil ist vorzugsweise als Verschlußseil ausgebildet. Dieses Verschlußseil kann dann mit Hilfe der Betätigungseinrichtung gespannt und in der Schließstellung aus Sicherheitsgründen verriegelt werden, wobei das Spannseil das karosseriefeste Hakenteil umgreift. Durch diese Auslegung läßt sich sowohl eine Spannung auf das Verdeckteil in der Schließstellung aufbringen als auch eine sichere Festlegung des Verdeckteils in der Schließstellung gewährleisten.

Bei einer bevorzugten Ausführungsform des Fahrzeugdachs nach der Erfindung ist das hintere Rahmenteil an der hinteren Querseite scharnierartig mit einer karosseriefesten Halterung lösbar verbunden. Diese scharnierartige Verbindung ist vorzugsweise nach dem Türscharnierprinzip ausgelegt, und das Aufnahmeteil ist karosseriefest. Durch entsprechendes Verdrehen des Verdeckteils in der Offenstellung kann dieses aus dem karosseriefesten Aufnahmeteil genommen werden, so daß das Verdeckteil insgesamt leicht vom Fahrzeugdach abnehmbar ist. In der in der karosseriefesten Halterung eingehängten Stellung des Verdeckteiles ist dieses definiert am Fahrzeugdach festgelegt, so daß das Verdeckteil auf einfache Weise leicht über die Dachöffnung gelegt und dieselbe verschlossen werden kann.

Gemäß einer alternativen Auslegungsform weist der Sicherheitsschnellverschluß eine Betätigungshandhabe mit einem Rastvorsprung auf, welcher mit einem zugeordneten, karosseriefesten Teil zusammenarbeitet. Vorzugsweise ist das karosseriefeste Teil als Konsolenteil ausgebildet, welches von dem Rastvorsprung in der Schließstellung des Verdeckteils untergriffen wird. Die Betätigungshandhabe ist in der Schließstellung vorzugsweise federbelastet gesichert.

Gemäß einer alternativen Ausführungsform des Fahrzeugdachs nach der Erfindung ist ein Sicherheitsschnellverschluß an jeder Querseite angeordnet. Bei dieser Auslegungsform werden das Abnehmen und das Anbringen des Verdeckteils erleichtert, da hierzu lediglich die Sicherheitsschnellverschlüsse an der vorderen und hinteren Querseite gelöst zu werden brauchen. Da ferner die vorderen und hinteren Sicherheitsverschlüsse eine im wesentlichen übereinstimmende Auslegungsform jedoch mit spiegelbildlicher Anordnung haben können, vereinfacht sich auch die Herstellung der Teile für das erfindungsgemäße Fahrzeugdach. Bei dieser alternativen Ausgestaltungsform sind dann zusätzlich karosseriefeste Aufnahmebolzen auch dem der hinteren Querseite zugeordneten Rahmenteil zugeordnet, wobei diese Aufnahmebolzen mit dem zugeordneten Rahmenteil vorzugsweise mittels wenigstens teilweisem Umgreifen zusammenarbeiten. Durch das Zusammenarbeiten der vorgesehenen, karosseriefesten Aufnahmebolzen mit dem jeweils zugeordneten Rahmenteil ist dann das Verdeckteil beim ordnungsgemäßen Aufsetzen fixiert und über die Sicherheitsschnellverschlüsse kann dann das flexible Material des Verdeckteils zuverlässig in der Schließstellung gespannt gehalten werden.

Die Erfindung wird nachstehend an Hand von bevorzugten Ausführungsformen unter Bezugnahme auf die beigefügte Zeichnung näher erläutert. Darin zeigt:
- Fig. 1: eine Teildraufsicht auf eine erste Ausführungsform eines Fahrzeugdachs nach der Erfindung,
- Fig. 2: eine Längsschnittansicht längs der Linie II-II des Fahrzeugdachs in Fig. 1,
- Fig. 3: eine Schnittansicht längs der Linie III-III in Fig. 1,
- Fig. 4: eine Schnittansicht längs der Linie IV-IV in Fig. 1
- Fig. 5: eine Teildraufsicht auf ein Fahrzeugdach gemäß einer zweiten bevorzugten Ausführungsform nach der Erfindung,
- Fig. 6: eine Schnittansicht längs der Linie VI-VI des Fahrzeugdachs in Fig. 5, und
- Fig. 7: eine Einzelteildarstellung zur Verdeutlichung der Funktionsweise eines Sicherheitsschnellverschlusses in Draufsicht.

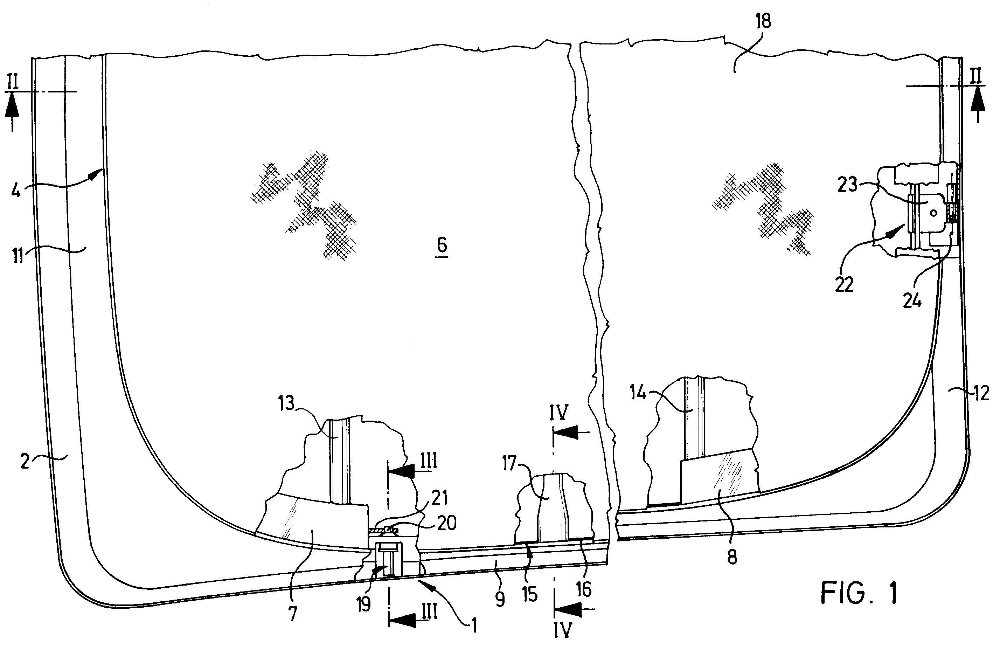

An Hand der Fig. 1 bis 4 wird eine erste bevorzugte Ausführungsform eines insgesamt mit 1 bezeichneten Fahrzeugdachs erläutert.

In einer festen Dachfläche 2 des Fahrzeugdachs 1 ist eine Dachöffnung 3 vorgesehen, welche von einem eingebauten Dachrahmen 4 eingefaßt ist. Der Dachrahmen 4 trägt eine umlaufende Dichtung 5, welche beim Beispiel als Profildichtung ausgebildet ist. Zum Verschluß der in Verbindung mit dem in die Dachöffnung 3 eingesetzten Dachrahmen 4 begrenzten Öffnung ist ein insgesamt mit 6 bezeichnetes Verdeckteil vorgesehen. Dieses Verdeckteil 6 umfaßt den vorderen und hinteren Querseiten zugeordnete, relativ starre Rahmenteile 7, 8, welche zweckmäßigerweise aus Aluminiumprofilmaterial hergestellt sind. Die Rahmenteile 7, 8 sind hinsichtlich ihrer Gestalt an die Form und Auslegung des Dachrahmens 4 an den zugeordneten Bereichen angepaßt und erstrecken sich bogenförmig von den beiden gegenüberliegenden Längsseiten 9, 10 über die jeweils zugeordnete Querseite 11, 12 hinweg. Zur Querversteifung umfaßt jedes Rahmenteil 7, 8 jeweils einen Querspriegel 13,14, welcher in die Baueinheit der Rahmenteile 7, 8 integriert ist. Die beiden Rahmenteile 7, 8 sind untereinander in Fahrzeuglängsrichtung gesehen mittels Spannelemente 15 verbunden, welche von einem Spannteil 16 gebildet werden, das an seinen Enden jeweils an den Rahmenteilen 7, 8 fest verankert ist.

Um eine Anpassung des Verdeckteils 6 an die Dachwölbung der festen Dachfläche 2 zu erzielen, sind zweckmäßigerweise in Längsrichtung in Abständen weitere Querspriegel 17 vorgesehen, welche am flexiblen Material 18 befestigt sind, welches sich über die gesamte Längs- und Quererstreckung des Verdeckteils spannt und sich auch über die Rahmenteile 7, 8 erstreckt.

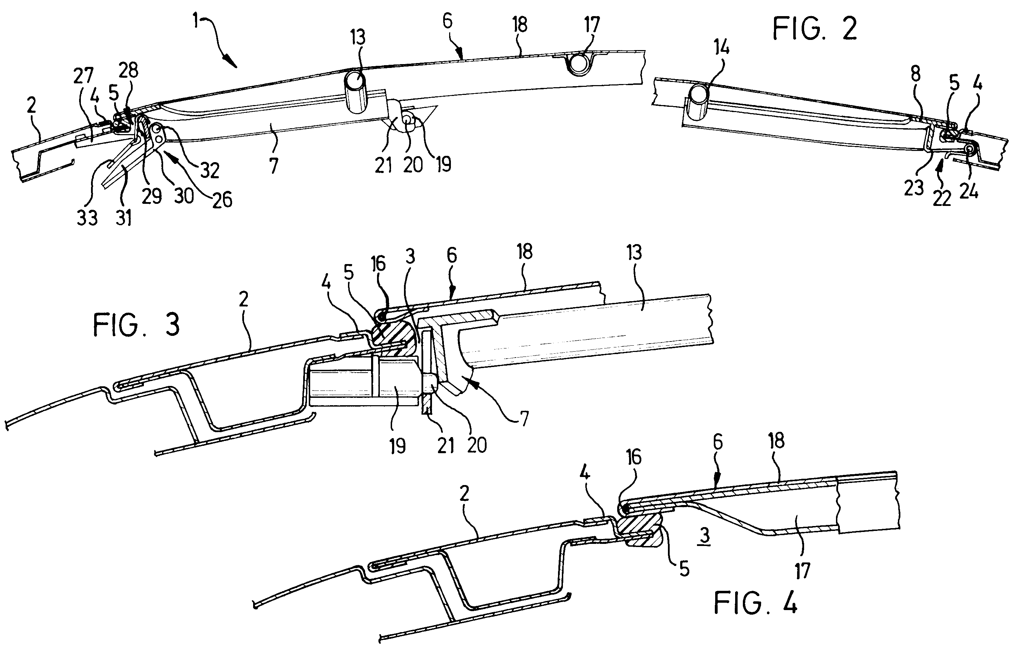

An Hand der Fig. 1 und 3 wird die Anordnung eines Aufnahmebolzens 19 verdeutlicht, welcher karosseriefest vorzugsweise am Dachrahmen 4 oder an der festen Dachfläche 2 vorgesehen ist. Dieser Aufnahmebolzen 19 ragt geringfügig in die vom Dachrahmen 4 begrenzte Dachöffnung 3 und hat ein zapfenförmiges Ende 20. Pro Längsseite ist jeweils ein derartiger Aufnahmebolzen 19 in der Nähe der Enden des vorderen Rahmenteils 7 angeordnet. Das vordere Rahmenteil 7 weist unter Zuordnung zu dem Aufnahmebolzen 19 und insbesondere dessen zapfenförmiges Ende 20 ein hakenförmiges Teil 21 auf, welches im Schließzustand des Verdeckteils 6 teilweise das zapfenförmige Ende 20 des Aufnahmebolzens 19 umgreift.

Das Verdeckteil 6 ist im Bereich der hinteren Querseite 12 über das hintere Rahmenteil 8 über eine türscharnierartig ausgebildete Halterung 22 lösbar angebracht. Hierzu sind beispielsweise zwei an der Querseite 12 im Abstand voneinander angeordnete Aufnahmeteile 23 (in der Zeichnung ist nur eines gezeigt) vorgesehen, welche karosseriefest sind und beispielsweise an der festen Dachfläche 2 oder dem Dachrahmen 4 befestigt sind. Das Aufnahmeteil 23 ist um eine Achse 24 drehbar und umgreift in der in der Zeichnung verdeutlichten Schließstellung des Verdeckteils 6 wenigstens teilweise ein zugeordnetes Teil des hinteren Rahmenteils 8.

An der vorderen Querseite 11 ist vorzugsweise etwa im Mittelbereich derselben ein Sicherheitsschnellverschluß 26 vorgesehen. Karosseriefest, d.h. am Dachrahmen 4 oder an der festen Dachfläche 2, ist ein Hakenteil 27 befestigt, während am vorderen Rahmenteil 7 ein zugeordnetes Schließteil 28 angebracht ist, welches ein Verschlußseil 29 umfaßt, welches in der in Fig. 2 verdeutlichten Sicherheits-Schließstellung mit dem Hakenteil 27 zusammenarbeitet und in dieses eingreift. Das Verschlußseil 29 ist an einer Betätigungseinrichtung 30 des Sicherheitsschnellverschlusses 26 mit seinen Enden festgelegt, welche eine Betätigungshandhabe 31 umfaßt, welche um eine Achse 32 am vorderen Rahmenteil 7 schwenkbar gelagert ist. Am Verschlußseil 29 ist ein Griffteil 33 angebracht, mittels welchem man zum vollständigen Lösen des Sicherheitsschnellverschlusses 26 in der Offenstellung der Betätigungseinrichtung 30 das Verschlußseil 29 von dem Hakenteil 27 trennen kann.

Nachstehend werden die Funktionsweise und die Handhabungsweise des Verdeckteils 6 am Fahrzeugdach 1 zum Öffnen und Schließen der Dachöffnung 3 näher erläutert.

In den Fig. 1 bis 4 ist das Verdeckteil 6 in seiner Schließstellung verdeutlicht. In dieser Schließstellung ist das hintere Rahmenteil 8 über die türscharnierartig ausgebildeten Halterungen 22 an der Dachöffnung 3 fixiert und festgehalten. Die an den beiden gegenüberliegenden Längsseiten 9, 10 vorgesehenen, karosseriefesten Aufnahmebolzen 19 werden an ihrem zapfenförmigen Ende 20 von dem hakenförmigen Teil 21 am vorderen Rahmenteil 7 umgriffen, und der Sicherheitsschnellverschluß 26 befindet sich in seiner insbesondere in Fig. 2 gezeigten Schließstellung. Im Zusammenwirken der beiden Rahmenteile 7 und 8 und der sie verbindenden Spannseile 16 wird das flexible Material 18 des Verdeckteils 6 zuverlässig zum Schließen der Dachöffnung 3 im gespannten Zustand gehalten, wobei die Querspriegel 17 zu einer verbesserten Querversteifung des Verdeckteils 6 beitragen. In dieser Schließstellung des Verdeckteils 6 werden die vorderen und hinteren Rahmenteile 7 und 8 sowie die Längsränder des Verdeckteils 6 über die Spannseile 16 gegen die umlaufende Dichtung 5 zuverlässig angedrückt, wobei die Querspriegel 17 zusätzlich dazu dienen, die Spannseile 16 unter Zwischenlage des flexiblen Materials 18 gegen die umlaufende Dichtung 5 anzudrücken. Somit erhält man eine zuverlässige Abdichtung zwischen dem Verdeckteil 6 und dem Dachrahmen 4 mit der umlaufenden Dichtung 5 in der Schließstellung des Verdeckteils 6, in welcher das flexible Material 18 über die beiden Rahmenteile 7 und 8 und unter Zwischenabstützung über die Querspriegel 17 in der Schließstellung des Verdeckteils 6 gespannt ist.

Zum Öffnen der Dachöffnung 3 und zum Abnehmen des Verdeckteils 6 wird zuerst der Sicherheitsschnellverschluß 26 an der vorderen Querseite 11 geöffnet, indem die Betätigungshandhabe 31 der Betätigungseinrichtung 30 um die Achse 32 in Fig. 2 in Gegenuhrzeigerrichtung gedreht wird. Hierbei wird das Verschlußseil 29 entspannt, liegt aber noch lose im Hakenteil 27. Selbst wenn daher in unbeabsichtigter Weise die Betätigungseinrichtung 30 beaufschlagt und die Betätigungshandhabe 31 in Öffnungsrichtung geschwenkt wird, ist das Verdeckteil 6 durch das Zusammenwirken des Verschlußseiles 29 und des Hakenteils 27 noch am Fahrzeug festgehalten. Ferner ist das Verdeckteil 6 auch noch mittels der türscharnierartig ausgebildeten Halterung 22 der hinteren Querseite 12 am Fahrzeug gehalten, so daß lediglich das flexible Material 18 des Verdeckteils 6 geringfügig entspannt ist.

Auch sind die hakenförmigen Teile 21 am Rahmenteil 7 noch in Eingriff mit den zapfenförmigen Enden 20 der karosseriefesten Aufnahmebolzen 19. Zur Vermeidung von Unfällen bei einer unbeabsichtigten Betätigung der Betätigungseinrichtung 30 ist somit das Verdeckteil 6 auch bei fahrendem Fahrzeug noch verliersicher - wenn auch nicht vollständig gespannt - gehalten.

Wenn man nun nach geöffnetem Sicherheitsschnellverschluß 26 an dem Griffteil 33 zieht, kann man das Verschlußseil 29 aus dem hakenförmigen Teil 27 aushaken, und das Verdeckteil 6 kann am vorderen Rahmenteil 7 vom Dachrahmen 4 getrennt werden, indem das vordere Rahmenteil 7 in Fig. 1 beispielsweise in Uhrzeigerrichtung nach oben verschwenkt wird, so daß die hakenförmigen Teile 21 am vorderen Rahmenteil 7 vom karosseriefesten Aufnahmebolzen 19 freikommen. Wenn das Verdeckteil 6 in entsprechender Weise beispielsweise mit den Abmessungen wenigstens des vorderen Rahmenteils 7 zusammengefaltet und zusammengelegt ist, kann das hintere Rahmenteil 8 von der türscharnierartig ausgebildeten Halterung 22 sowie von dem Aufnahmeteil 23 desselben gelöst werden, so daß sich das Verdeckteil 6 vollständig abnehmen und beispielsweise im Fahrzeuginnern im zusammengelegten Zustand verstauen läßt. Bei abgenommenem Verdeckteil 6 ist dann die vom Dachrahmen 4 begrenzte Dachöffnung 3 in der festen Dachfläche 2 vollständig freigelegt, so daß eine sehr große freigelegte Dachöffnung 3 zur Verfügung steht, um den Fahrzeuginsassen ein cabrioähnliches Gefühl bei der Fahrt zu vermitteln.

Wenn es nun beispielsweise schlechtes Wetter wird und zu regnen beginnt, kann das Verdeckteil 6 wieder leicht zum Verschluß der Dachöffnung 3 angebracht werden. Hierzu wird das Verdeckteil 6 zuerst am hinteren Rahmenteil 8 an der türscharnierartig ausgebildeten Halterung 22 eingehängt und verankert. Hierdurch ist das Verdeckteil 6 am Fahrzeugdach 1 fixiert, und es kann dann aufgefaltet werden, so daß das vordere Rahmenteil 7 auf der vorderen Querseite 22 zu liegen kommt. Die hakenförmigen Teile 21 am vorderen Rahmenteil 7 werden dann in Eingriff mit den zugeordneten Aufnahmebolzen 19 gebracht, so daß die zapfenförmigen Enden 20 derselben teilweise vom hakenförmigen Teil 21 umgriffen sind. Dann wird das Verschlußseil 29 in das Hakenteil 27 des Sicherheitsschnellverschlusses 26 eingehakt und die Betätigungshandhabe 31 der Betätigungseinrichtung 30 wird in Uhrzeigerrichtung in Fig. 2 um die Achse 32 in die in Fig. 2 gezeigte Schließstellung gedreht. Nunmehr ist das Verdeckteil 6 wieder im gespannten Zustand unter Abdeckung der Dachöffnung 3 gehalten und verschließt die Dachöffnung 3 im Zusammenwirken mit der umlaufenden Dichtung 5 am Dachrahmen 4 auf dichte Weise.

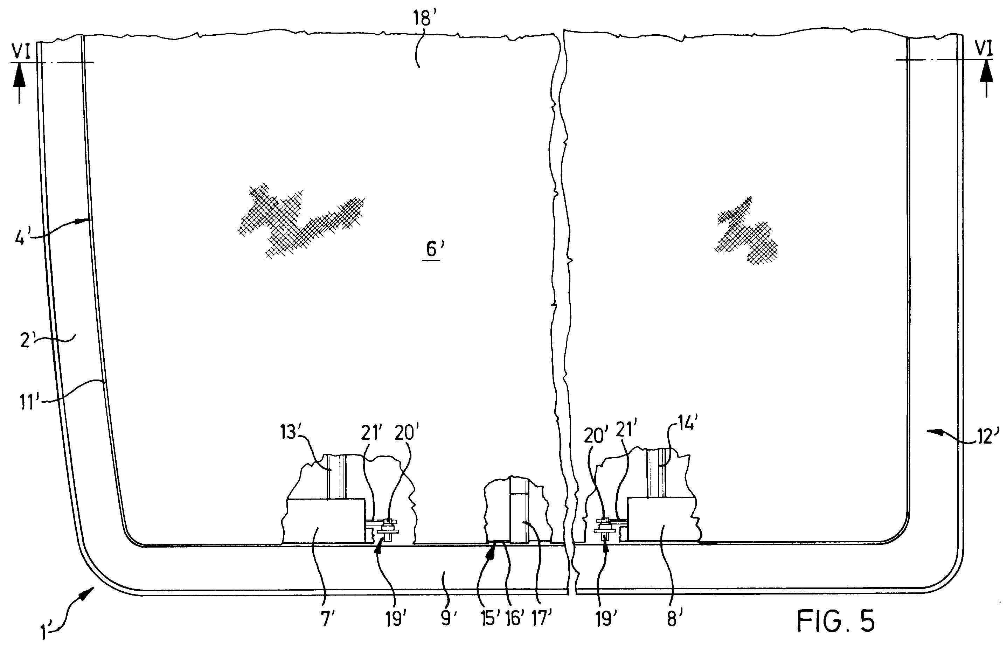

Nunmehr wird an Hand der Fig. 5 bis 7 eine zweite bevorzugte Ausführungsform eines dort insgesamt mit 1' bezeichneten Fahrzeugdachs erläutert. Gleiche oder ähnliche Teile sind hierbei mit denselben Bezugszeichen versehen, aber tragen zur Unterscheidung zusätzlich "'".

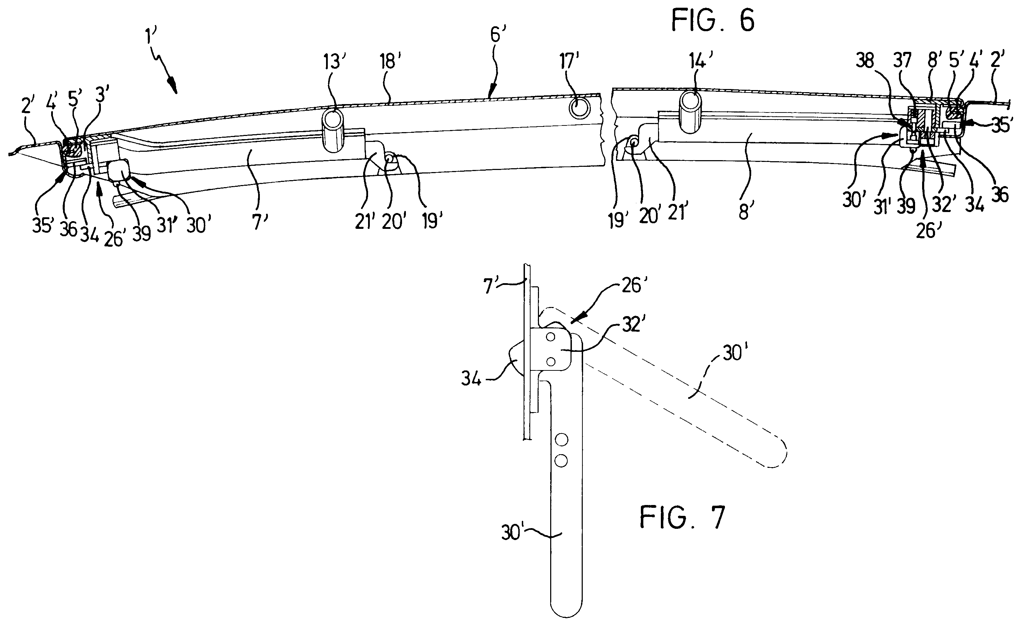

Der wesentliche Unterschied des insgesamt mit 1' bezeichneten Fahrzeugdachs nach den Fig. 5 bis 7 ist im wesentlichen darin zu sehen, daß an jeder Querseite 11', 12' ein Sicherheitsschnellverschbuß 26' vorgesehen ist. Die beiden Sicherheitsschnellverschlüsse 26' sind im wesentlichen in übereinstimmender Weise ausgelegt, jedoch spiegelsymmetrisch an den Rahmenteilen 7', 8' angeordnet. Es wird daher nachstehend lediglich näher auf eine Ausführungsform eines Sicherheitsschnellverschlusses 26' eingegangen, dessen nähere Einzelheiten teilweise unter Bezugnahme auf Fig. 7 und teilweise unter Bezugnahme auf Fig. 6 erläutert werden. Ferner sind an jeder Längsseite 9', 10' jeweils zwei Aufnahmebolzen 19' angeordnet, welche mit zugeordneten hakenförmigen Teilen 21' der beiden Rahmenteile 7', 8' in der Schließstellung des Verdeckteils 6' zusammenarbeiten. Das Zusammenarbeiten und die Funktionsweise von hakenförmigen Teilen 21' an den Rahmenteilen 7' und 8' und den karosseriefesten Aufnahmebolzen 19' sind im wesentlichen gleich wie bei der voranstehend erläuterten bevorzugten Ausführungsform.

Unter Bezugnahme auf die Fig. 6 und 7 werden nunmehr nähere Einzelheiten eines Sicherheitsschnellverschlusses 26' erläutert. Der Sicherheitsschnellverschluß 26' hat als Betätigungseinrichtung 30' eine Betätigungshandhabe 31', welche einen Rastvorsprung 34 trägt und um eine Achse 32 schwenkbar am zugeordneten Rahmenteil 7', 8' gelagert ist. In der in Fig. 6 und in durchgezogener Linie in Fig. 7 verdeutlichten Schließstellung des Sicherheitsschnellverschlusses 26' untergreift der Rastvorsprung 34 als karosseriefestes Teil 35' ein Konsolenteil 36, welches am Dachrahmen 4' an der Querseite 11' bzw. 12' befestigt ist. Mittels einer Feder 37 ist der Sicherheitsschnellverschluß 26' in der dargestellten Schließstellung gesichert, und die Betätigungshandhabe 31' ist in der Schließstellung gegen unbeabsichtigtes Betätigen arretiert. Die näheren Einzelheiten einer Ausführungsform einer hierfür bestimmten Verriegelungseinrichtung 38, welche die Feder 37 umfaßt, sind in der rechten Hälfte in Fig. 6 unter Zuordnung zu dem Sicherheitsschnellverschluß 26' an der hinteren Querseite 12' gezeigt.

Zum Öffnen des Verdeckteils 6' werden die beiden Sicherheitsschnellverschlüsse 26' geöffnet, wozu man zuerst den durch die Feder 37 belasteten Verriegelungsknopf 39 der Verriegelungseinrichtung 38 niederdrücken muß, um den Verriegelungszustand der Verriegelungseinrichtung 38 aufzuheben. Nunmehr kann die Betätigungshandhabe 31' in Gegenuhrzeigerrichtung nach Fig. 7 um die Achse 32' in die in Fig. 7 in gebrochenen Linien eingetragene Öffnungsstellung geschwenkt werden, in welcher der Rastvorsprung 34 von dem karosseriefesten Konsolenteil 36 freikommt und somit der Sicherheitsschnellverschluß 26' seine Öffnungsstellung einnimmt. Nunmehr kann das Verdeckteil 6' wenigstens auf die Größe eines der Rahmenteile 7', 8' zusammengelegt werden und von der festen Dachfläche 2' abgenommen und in geeigneter Weise verstaut werden.

Zum Anbringen des Verdeckteils 6' wird dieses aufgefaltet und die Rahmenteile 7', 8' werden an den jeweiligen Querseiten 11', 12' angelegt. Nach dem Einhaken der Aufnahmebolzen 19' in die hakenförmigen Teile 21' an den Rahmenteilen 7', 8', welche zugleich zur Fixierung des aufgelegten Verdeckteils 6' dienen, werden dann die Sicherheitsschnellverschlüsse 26' hintereinander in die in Fig. 6 verdeutlichte Schließstellung gebracht. Nunmehr ist das Verdeckteil 6' über die Dachöffnung 3' in Verbindung mit den relativ starren Rahmenteilen 7' und 8' sowie den Aufnahmebolzen 19' und den hakenförmigen Teilen 21' an den Rahmenteilen 7', 8' im gespannten Zustand gehalten und verschließt die Dachöffnung 3' auf dichte Weise über die am Dachrahmen 4' umlaufende Dichtung 5' und die Spannseile 16' zwischen den relativ starren Rahmenteilen 7', 8'. Somit erreicht man auch bei dieser Ausführungsform im Schließzustand des Verdeckteils 6' einen dichten Verschluß der Dachöffnung 3' des Fahrzeugdachs 1'. Wenn das Verdeckteil 6' hingegen abgenommen ist, läßt sich die gesamte vom Dachrahmen 4' begrenzte Dachöffnung 3' freilegen, welche relativ groß bemessen werden kann.

Selbstverständlich ist die Erfindung nicht auf die voranstehend beschriebenen Einzelheiten bei den bevorzugten Ausführungsformen beschränkt, sondern es sind zahlreiche Abänderungen und Modifikationen möglich, die der Fachmann im Bedarfsfall treffen wird, ohne den Erfindungsgedanken zu verlassen. Insbesondere ist es bei der erfindungsgemäßen Auslegung des Fahrzeugdachs 1, 1' wesentlich, daß in der Schließstellung das Verdeckteil 6, 6' einen zuverlässigen, dichten Abschluß der Dachöffnung 3, 3' gewährleistet, aber die Dachöffnung 3, 3' bei offenem Verdeckteil 6, 6', welches vollständig von der festen Dachfläche 2, 2' abnehmbar ist, freigelegt wird. Hierdurch wird den Fahrzeuginsassen bei abgenommenem Verdeckteil 6, 6' ein cabrioähnliches Gefühl durch die groß bemessene, freigelegte Dachöffnung 3, 3' vermittelt. Auch läßt sich das erfindungsgemäße Fahrzeugdach 1, 1' auf relativ einfache Weise nachträglich in ein Fahrzeug einbauen, wobei man insbesondere eine relativ geringe Anzahl von zusätzlichen Teilen benötigt und wenig Arbeitsaufwand zum Einbau erforderlich ist. Auch sind das Verdeckteil 6, 6' und die dazugehörigen Funktionsteile relativ kostengünstig herstellbar, so daß nach der Erfindung ein preisgünstiges Verdeckteil 6, 6' zum Verschließen einer Dachöffnung 3, 3' in einer festen Dachfläche 2, 2' bereitgestellt werden kann.

### Bezugszeichen

- 1: Fahrzeugdach insgesamt
- 2: Feste Dachfläche
- 3: Dachöffnung
- 4: Dachrahmen
- 5: Umlaufende Dichtung
- 6: Verdeckteil insgesamt
- 7: Rahmenteil vorne
- 8: Rahmenteil hinten
- 9: Längsseite
- 10: Längsseite
- 11: Querseite vorne
- 12: Querseite hinten
- 13: Querspriegel am vorderen Rahmenteil 7
- 14: Querspriegel am hinteren Rahmenteil 8
- 15: Spannelement
- 16: Spannseil
- 17: Querspriegel
- 18: Flexibles Material
- 19: Aufnahmebolzen
- 20: Zapfenförmiges Ende von 19
- 21: Hakenförmiges Teil am Rahmenteil 7, 8
- 22: Türscharnierartig ausgebildete Halterung
- 23: Aufnahmeteil
- 24: Achse
- 26: Sicherheitsschnellverschluß insgesamt
- 27: Hakenteil
- 28: Schließteil
- 29: Verschlußseil
- 30: Betätigungseinrichtung
- 31: Betätigungshandhabe
- 32: Achse
- 33: Griffteil von Verschlußseil 29
- 34: Rastvorsprung von Sicherheitsschnellverschluß 26'
- 35': Karosseriefestes Teil
- 36: Konsolenteil
- 37: Feder
- 38: Verriegelungseinrichtung
- 39: Verriegelungsknopf

In den Fig. 5 bis 7 sind bei der zweiten bevorzugten Ausführungsform gleiche oder ähnliche Teile mit den entsprechenden Bezugszeichen mit zusätzlichem "'" versehen.

## Patentansprüche

1. Fahrzeugdach mit einem ein flexibles Material (18; 18') umfassenden, spannbaren Verdeckteil (6; 6'), das eine in einer festen Dachfläche (2; 2') des Fahrzeugs vorgesehene und von einem Dachrahmen (4; 4') mit einer umlaufenden Dichtung (5; 5') eingefaßte Dachöffnung (3; 3') wahlweise verschließt oder freilegt, und dessen wenigstens eine Querseite (11, 12; 11', 12') über eine verrastbare Verbindungseinrichtung (26; 26') mit der festen Dachfläche (2; 2') lösbar verbunden ist, dadurch **gekennzeichnet,** daß das Verdeckteil (6; 6') an der vorderen und der hinteren Querseite (11, 12; 11', 12') relativ starre Rahmenteile (7, 8; 7', 8') umfaßt, welche über in Längsrichtung verlaufende Spannelemente (15; 15') miteinander verbunden sind und daß auch die andere Querseite (12, 11; 12', 11') des Verdeckteils (6; 6') lösbar mit der festen Dachfläche (2; 2') verbunden ist.

2. Fahrzeugdach nach Anspruch 1, dadurch gekennzeichnet, daß die Spannelemente (15; 15') von einem eine Dichtungsanpressung in Längsrichtung bei gespanntem Verdeckteil (6; 6') bewirkenden Spannseil (16; 16') gebildet werden.

3. Fahrzeugdach nach Anspruch 1 oder 2, dadurch gekennzeichnet, daß das Verdeckteil (6; 6') mehrere, im Abstand zueinander angeordnete und mit dem flexiblen Material (18; 18') fest verbundene Querversteifungsspriegel (13, 14; 13', 14'; 17; 17') umfaßt.

4. Fahrzeugdach nach einem der vorangehenden Ansprüche, dadurch gekennzeichnet, daß wenigstens das vordere Rahmenteil (7; 7') mit je einem karosseriefesten Aufnahmebolzen (19; 19') an der Längsdachseite (9, 10; 9', 10') zum Spannen des Verdeckteils (6; 6') zusammenarbeitet.

5. Fahrzeugdach nach Anspruch 4, dadurch gekennzeichnet, daß der karosseriefeste Aufnahmebolzen (19; 19') wenigstens teilweise von einem hakenförmigen Teil (21; 21') des Rahmenteils (7; 7', 8') umgriffen ist.

6. Fahrzeugdach nach einem der vorangehenden Ansprüche, dadurch gekennzeichnet, daß wenigstens eines der Rahmenteile (7; 7', 8') mittels eines Sicherheitsschnellverschlusses (26; 26') in der Schließstellung verriegelbar ist.

7. Fahrzeugdach nach Anspruch 6, dadurch gekennzeichnet, daß ein Sicherheitsschnellverschluß (26; 26') an beiden Querseiten (11; 11', 12') angeordnet ist.

8. Fahrzeugdach nach Anspruch 6 oder 7, dadurch gekennzeichnet, daß der Sicherheitsschnellverschluß (26) ein karosseriefestes Hakenteil (27) und ein damit zusammenarbeitendes und am Rahmenteil (7) befestigtes Schließteil (28) umfaßt, welches mittels einer Betätigungseinrichtung (30) in einer Spannstellung verriegelbar ist.

9. Fahrzeugdach nach Anspruch 8, dadurch gekennzeichnet, daß das Schließteil (28) als Verschlußseil (29) ausgebildet ist.

10. Fahrzeugdach nach Anspruch 6 oder 7, dadurch gekennzeichnet, daß der Sicherheitsschnellverschluß (26') eine Betätigungshandhabe (31') mit einem Rastvorsprung (34) aufweist, welcher mit einem zugeordneten, karosseriefesten Teil (35') zusammenarbeitet.

11. Fahrzeugdach nach Anspruch 10, dadurch gekennzeichnet, daß das karosseriefeste Teil (35') als Konsolenteil (36) ausgebildet ist und der Rastvorsprung (34) in der Schließstellung das Konsolenteil (36) untergreift.

12. Fahrzeugdach nach einem der vorangehenden Ansprüche, dadurch gekennzeichnet, daß das hintere Rahmenteil (8) an der hinteren Querseite (12) scharnierartig mit einer karosseriefesten Halterung (22) lösbar verbunden ist.

13. Fahrzeugdach nach Anspruch 12, dadurch gekennzeichnet, daß die scharnierartige Verbindung (22) nach dem Türscharnierprinzip ausgelegt ist und das Aufnahmeteil (23) karosseriefest ist.

14. Fahrzeugdach nach Anspruch 6 oder 7, dadurch gekennzeichnet, daß der Sicherheitsverschluß (26) an der vorderen Querseite (11) vorzugsweise an deren Mittelbereich angeordnet ist.

15. Fahrzeugdach nach einem der Ansprüche 6 bis 11, dadurch gekennzeichnet, daß der Sicherheitsschnellverschluß (26') an jeder Querseite (11', 12') angeordnet ist.

16. Fahrzeugdach nach einem der vorangehenden Ansprüche, dadurch gekennzeichnet, daß die Rahmenteile (7, 8; 7', 8') aus Aluminiumprofilmaterial hergestellt sind.

## Claims

1. A vehicle roof having, comprising a flexible material (18; 18'), a tautly stretchable hood part (6; 6') which optionally closes or exposes a roof opening (3; 3') provided in a fixed roof area (2; 2') of the vehicle and encircled by a roof frame (4; 4') with an encircling seal (5; 5'), and of which at least one transverse side (11, 12; 11', 12') can be separably connected to the rigid roof area (2; 2') via a connecting means (26; 26') adapted to be locked by a catch, characterised in that the hood part (6; 6') comprises at the front and rear transverse sides (11, 12; 11', 12') relatively rigid frame parts (7, 8; 7', 8') which are connected to one another by longitudinally extending tensioning elements (15; 15') and in that also the other transverse side (12, 11, 12', 11') of the hood part (6; 6') is separably connected to the rigid roof area (2: 2').

2. A vehicle roof according to Claim 1, characterised in that the tensioning elements (15; 15') are constituted by a tensioning cable (16; 16') which produces an application of sealing pressure in the longitudinal direction when the hood part (6; 6') is stretched taut.

3. A vehicle roof according to Claim 1 or 2, characterised in that the hood part (6; 6') comprises a plurality of spaced apart transverse stiffening hoops (13, 14; 13' 14'; 17, 17') which are rigidly connected to the flexible material (18; 18')

4. A vehicle roof according to one of the preceding Claims, characterised in that at least the front frame part (7; 7') cooperates with in each case a receiving bolt (19; 19') rigid with the body and on the long side (9, 10; 9', 10') of the roof in order to stretch the hood part (6; 6') taut.

5. A vehicle roof according to Claim 4, characterised in that the receiving bolt (19; 19') rigid with the body is at least partially enclosed by a hook-shaped part (21; 21') of the frame part (7; 7', 8').

6. A vehicle roof according to one of the preceding Claims, characterised in that at least one of the frame parts (7; 7', 8') can be locked in the closed position by means of a quick-action safety fastening (26; 26').

7. A vehicle roof according to Claim 6, characterised in that a quick-acting safety fastening (26; 26') is disposed on both transverse sides (11; 11', 12').

8. A vehicle roof according to Claim 6 or 7, characterised in that the quick-acting safety fastening (26) comprises a hook part (27) rigid with the body and, cooperating therewith and fixed on the frame part (7) a closure part (28) which can be locked in a tensioned position by means of an actuating device (30).

9. A vehicle roof according to Claim 8, characterised in that the closure part (28) is constructed as a fastening cable (29).

10. A vehicle roof according to Claim 6 or 7, characterised in that the quick-action safety fastener (26') comprises an actuating handle (31') with a catch projection (34) which cooperates with an associated part (35') rigid with the body.

11. A vehicle roof according to Claim 10, characterised in that the part (35') rigid with the body is constructed as a console part (36) and in that the catch projection (34) engages under the console part (36) when in the closed position.

12. A vehicle roof according to one of the preceding Claims, characterised in that at the rear transverse side (12), the rear frame part (8) is separably connected in the manner of a hinge to a holder (22) rigid with the body.

13. A vehicle roof according to Claim 12, characterised in that the hinge-like connection (22) is designed on the door hinge principle and in that the housing part (23) is rigid with the body.

14. A vehicle roof according to Claim 6 or 7, characterised in that the safety fastener (26) is disposed on the front transverse side (11) and preferably on the middle part thereof.

15. A vehicle roof according to one of Claims 6 to 11, characterised in that the quick-action safety fastener (26') is disposed on each transverse side (11'; 12').

16. A vehicle roof according to one of the preceding Claims, characterised in that the frame parts (7, 8; 7', 8') are manufactured from aluminium section.

## Revendications

1. Toit de véhicule comportant une capote (6 ; 6') en matériau flexible (18 ; 18') que l'on peut tendre, capote qui obture ou libère à volonté une ouverture de toit (3 ; 3') pratiquée dans le toit rigide (2 ; 2') du véhicule et bordée d'un cadre (4 ; 4') avec un joint périphérique d'étanchéité (5 ; 5'), au moins un côté transversal (11, 12 ; 11', 12') de la capote étant relié amovible au toit rigide (2 ; 2') par l'intermédiaire d'un dispositif de liaison (26 ; 26') déverrouillable,
caractérisé en ce que
la capote (6 ; 6'), sur le côté transversal avant et arrière (11, 12 , 11', 12') inclut des parties de cadre (7, 8 ; 7', 8') relativement rigides, reliées entre elles par des organes de tension disposés longitudinalement tandis que l'autre côté transversal (12, 11, 12', 11') de la capote (6, 6') est relié de manière amovible au toit rigide (2 ; 2').

2. Toit de véhicule selon la revendication 1,
caractérisé en ce que
les organes de tension (15 ; 15') sont constitués par un câble (16 ; 16') qui presse sur le joint d'étanchéité en direction longitudinale lorsqu'on tend la capote (6 ; 6').

3. Toit de véhicule selon la revendication 1 ou 2,
caractérisé en ce que
la capote (6 ; 6') comporte plusieurs arceaux raidisseurs transversaux (13, 14, 13', 14'), espacés entre eux et solidaires du matériau flexible (18 ; 18') de la capote.

4. Toit de véhicule selon une des revendications précédentes,
caractérisé en ce qu'
au moins la partie avant du cadre (7 ; 7') coopère avec chacune des broches de réception (19, 19') solidaires de la carrosserie et situées sur les côtés longitudinaux du toit (9, 10 ; 9', 10'), pour tendre la capote (6 ; 6').

5. Toit de véhicule selon la revendication 4,
caractérisé en ce que
les broches de réception (19 ; 19') fixées à la carrosserie sont entourées au moins partiellement par une pièce en forme de crochet (21, 21') de la partie de cadre (7 ; 7', 8').

6. Toit de véhicule selon une des revendications précédentes,
caractérisé en ce qu'
au moins une des parties de cadre (7 ; 7', 8') peut être bloquée en position de fermeture par une fermeture rapide de sécurité (26 ; 26').

7. Toit de véhicule selon la revendication 6,
caractérisé en ce que
chacun des deux côtés transversaux (11 ; 11', 12') est équipé d'une fermeture rapide de sécurité (26, 26').

8. Toit de véhicule selon la revendication 6 ou 7,
caractérisé en ce que
la fermeture rapide de sécurité (26) est constituée d'un crochet (27) fixé à la carrosserie et coopérant avec une pièce de fermeture (28) fixée à la partie de cadre (7) et qui peut être verrouillée en position de tension par un dispositif de manoeuvre (30).

9. Toit de véhicule selon la revendication 8,
caractérisé en ce que
la pièce de fermeture (28) est constituée par un câble de verrouillage (29).

10. Toit de véhicule selon la revendication 6 ou 7,
caractérisé en ce que
la fermeture rapide de sécurité (26') comporte une poignée de manoeuvre (31') équipée d'une saillie d'arrêt (34) coopérant avec une pièce correspondante (35') solidaire de la carrosserie.

11. Toit de véhicule selon la revendication 10,
caractérisé en ce que
la pièce (35') fixée à la carrosserie a la forme d'une console (36) sous laquelle est en prise la saillie d'arrêt (34), en position de fermeture.

12. Toit de véhicule selon une des revendications précédentes,
caractérisé en ce que
la partie arrière du cadre (8) est montée en charnière le long du côté transversal arrière (12), de manière amovible, par l'intermédiaire d'une articulation (22) fixée à la carrosserie.

13. Toit de véhicule selon la revendication 12,
caractérisé en ce que
la liaison (22) en charnière est du genre charnière de porte, avec pièce réceptrice (23) fixée à la carrosserie.

14. Toit de véhicule selon la revendication 6 ou 7,
caractérisé en ce que
la fermeture de sécurité (26) est placée sur le côté transversal avant (11), de préférence en son milieu.

15. Toit de véhicule selon une des revendications 6 à 11,
caractérisé en ce qu'
une fermeture rapide de sécurité (26') est placée sur chaque côté transversal (11', 12').

16. Toit de véhicule selon une des revendications précédentes,
caractérisé en ce que
les parties de cadre (7, 8 ; 7', 8') sont des profilés en aluminium.
